# EUROPÄISCHE PATENTANMELDUNG

(11) **EP 3 479 924 A1**
(43) Veröffentlichungstag der Anmeldung: **08.05.2019**
(21) Anmeldenummer: 18203774.7
(22) Anmeldetag: 31.10.2018
(51) Int. Cl.: B22D 19/04, B22D 25/04

(54) **FORM**

(30) Priorität: 06.11.2017 AT 4282017
(71) Anmelder: Rosendahl Nextrom GmbH, 8212 Pischelsdorf am Kulm (AT)
(72) Erfinder: WUND, René, Dipl.-Ing., 8045 Graz (AT); SEMLER, Gerald Josef, 8230 Hartberg (AT); PROKOP, Rainer Richard, 8274 Buch - St. Magdalena (AT); HATZL, Wolfgang, 8255 St. Jakob im Walde (AT); PREM, Rene Michael Herbert, Ing., 8212 Pischelsdorf (AT); BOM, Guido, Ing., 8223 Stubenberg (AT); ARTINGER, Manfred, 8212 Pischelsdorf (AT); ARZT, Christian, Dipl.-Ing. (FH), 8230 Hartberg-Umgebung (AT)
(74) Vertreter: Beer & Partner Patentanwälte KG

(57) **Zusammenfassung**

Eine Angussform (10) für das Angießen von Verbindern (5) und Polverbindern (6) an Fahnen (4) von positiven und negativen Platten (3) für Blei-Säure-Akkumulatoren 1 umfasst einen, dem Hohlraum (11) für Polverbinder (6) zugeordneten, Auswerferstift (12), der durch Bewegen einer Ausstoßerplatte (13) aus seiner Bereitschaftslage in eine Wirklage verstellbar ist. Um die Größe, insbesondere die Länge des Hohlraumes (11) für Polverbinder (6), auf den gewünschten Wert ändern zu können, ist die Bereitschaftslage des Auswerferstiftes (12) durch eine Verstellmechanik (14) veränderbar, indem die Stellung des Auswerferstiftes (12) an der Ausstoßerplatte (13) verändert wird.

## Beschreibung

Die Erfindung betrifft eine Form mit den Merkmalen des einleitenden Teils von Anspruch 1.

Problematisch bei Formen ist, dass die Abmessungen der Hohlräume nur mit erheblichem Aufwand geändert werden können. Dieses Problem stellt sich auch bei Formen, mit welchen Verbinder und Polverbinder an die Fahnen von Batterieplatten angegossen werden (sogenannte "Angussformen").

In derartigen Angussformen werden Verbinder (Brücken) und Polverbinder (Polbrücken) an die Fahnen von positiven und negativen Platten von Blei-Säure-Akkumulatoren angegossen.

Die Verbinder dienen dazu, die Fahnen von zu Plattenpaketen zusammengefassten positiven Bleiplatten einerseits und negativen Bleiplatten anderseits von Blei-Säure- Akkumulatoren miteinander elektrisch leitend zu verbinden. Diese Verbinder können unterschiedliche Formen und Ausgestaltungen aufweisen.

Eine Angussform für das Angießen von Verbindern und Polverbindern an Platten von Blei-Säure- Akkumulatoren besteht aus Hohlräumen für mindestens einen positiven und einen negativen Verbinder, die als Polverbinder ausgebildet sein können. In vielen Fällen besteht eine Angussform aus Hohlräumen für das Herstellen von je fünf positiven und fünf negativen Verbindern sowie je einem positiven und einem negativen Polverbinder.

Das Ausbilden unterschiedlicher Verbinder erfordert unterschiedliche Mengen an flüssigem Blei, was dazu führt, dass den Polverbindern, die eine größere Menge an flüssigem Blei benötigen, meistens eine zusätzliche Kühlung zugeordnet sein muss.

Es ist auch bekannt, dass die Kühlung meistens in einem eigenen Poleinsatz zur Verfügung gestellt wird, der die Kontur des zu produzierenden Polverbinders enthält.

Polverbinder dienen auch dazu, die Bleiplatten im Inneren des Blei-Säure-Akkumulators mit den außen liegenden Anschlussstellen zu verbinden.

Dazu wird der Pol-Stängel des Polverbinders mit der Polbuchse im Deckel eines Batteriegehäuses in einem eigenen, gesonderten Verfahren verschweißt. Da die Lage der Polbuchsen, z.B. durch unterschiedliche Rohmaterialien oder einen unterschiedlichen Anteil an Recyclingmaterial im Kunststoff oder durch Einsatz von unterschiedlichen Deckelpolbuchsen-Einsätzen, unterschiedlich ist, die Angussform aber immer dieselbe ist, muss die Länge des Pol-Stängels eingestellt werden können.

Dies wird bisher auf zwei verschiedene Arten ausgeführt.

Einerseits kann der gesamte Poleinsatz (welcher die Kühlung umfasst) getauscht werden. Dazu muss die Angussform aus der Angussanlage entnommen und der Poleinsatz ausgebaut werden. Es kommt zum Abkühlen der Angussform. Daher dauert es einige Zeit, um diese wieder auf die Betriebstemperatur zu bringen, was zu Produktionsausfällen und/oder Stillständen führt.

Anderseits kann die Pol-Stängel-Länge durch Verstellen des Polauswerferstiftes angepasst werden. Dazu muss die Angussform wiederum häufig aus der Angussanlage entnommen, d.h. ausgebaut, werden, damit die Lage des Polauswerferstiftes geändert werden kann.

Angussvorrichtungen sind in verschiedenen Ausführungsformen bekannt. Beispiele sind EP 1 339 514 A, EP 1 590 113 B, EP 2 001 620 A, WO 99/04919 A, EP 0 630 526 A, WO 91/05625 A und WO 2014/006401 A2.

DE 1 162 432 B offenbart eine Maschine zum Herstellen von Plattenblöcken für Akkumulatoren und ein Gießwerk, um Polbrücken mit Stutzen (siehe Fig. 71, 72) zu gießen (siehe Fig. 53) und sie an den Platten jedes Plattenstapels anzuschweißen. Die Ausführungen in DE 1 162 432 B zeigen, dass der Ausstoßstiftsatz mit den Ausstoßstiften senkrecht am Gestell mit Hilfe eines Griffs an einer Welle eingestellt werden kann. Auf der Welle sitzen Schnecken in treibendem Eingriff mit Schneckenritzeln an den Gewindespindeln (siehe Fig. 59), auf denen der Ausstoßstiftsatz ruht. Die Öffnungen in der Gießform und die Enden der Ausstoßstifte bilden einen geschlossenen Hohlraum zum Gießen der Stutzen und Polbrücken. DE 1 162 432 B zeigt eine Verstellmechanik der Ausstoßstifte mittels eines Schneckengetriebes, wodurch die Polstutzenlänge durch Verstellen der Ausstoßstifte in Richtung der Achse des Hohlraumes mittels eines Schneckengetriebes angepasst werden kann.

WO 2014/201476 A1 zeigt ein Verfahren zum Angießen von Laschen oder Polstängeln an Fahnen von Plattensätzen von Plattensätzen von Blei-Säure-Batterien. Aus der Beschreibung geht ein Formenblock mit wenigstens einem Formhohlraum und dem Formhohlraum zugeordneten Auswerfer hervor. Weiters zeigt WO 2014/201476 A1 eine zum Heben jedes Auswerfers zugeordnete Einrichtung.

US 2,454,051 A, WO 88/02930 A1 und US 4,108,417 A zeigen Gießformen für Zellverbinder für Batterien, bei denen den Auswerferstiften ebenfalls eine Verstellmechanik zugeordnet ist.

Ausgehend von dem genannten Stand der Technik liegt der Erfindung die Aufgabe zugrunde, eine Form der eingangs genannten Gattung so auszubilden, dass die Länge eines Hohlraumes der Form, insbesondere des Hohlraumes für einen Pol-Stängel, auf einfache Weise eingestellt werden kann.

Dies wird erfindungsgemäß mit einer Form erreicht, welche die Merkmale von Anspruch 1 aufweist.

Bevorzugte und vorteilhafte Ausgestaltungen der erfindungsgemäßen Form sind Gegenstand der Unteransprüche.

Ein erheblicher Vorteil der erfindungsgemäßen Form gegenüber bekannten Vorrichtungen besteht darin, dass bei der Erfindung das Einstellen der Länge des Hohlraumes, insbesondere des Hohlraumes für einen Pol-Stängel, möglich ist, ohne dass die Form, insbesondere die Angussform, aus der Vorrichtung ausgebaut oder entnommen und zerlegt werden muss.

Von Vorteil ist bei der Erfindung, dass eine den Auswerferstift zugeordnete Verstellmechanik in die Form (Angussform) integriert sein kann.

So erlaubt die erfindungsgemäße Form ein einfaches Einstellen einer Geometrie einer Gussform, insbesondere einer Angussform für das Angießen von Verbindern (Brücken) und Polverbindern (Polbrücken) an die Fahnen von positiven und negativen Bleiplatten von Blei-Säure-Akkumulatoren.

Weitere Einzelheiten und Merkmale der Erfindung ergeben sich aus der nachstehenden Beschreibung der Zeichnungen, in welchen eine erfindungsgemäße Form (teilweise) am Beispiel einer Angussform dargestellt ist. Es zeigt:
- Fig. 1: eine erfindungsgemäße Form im Schnitt,

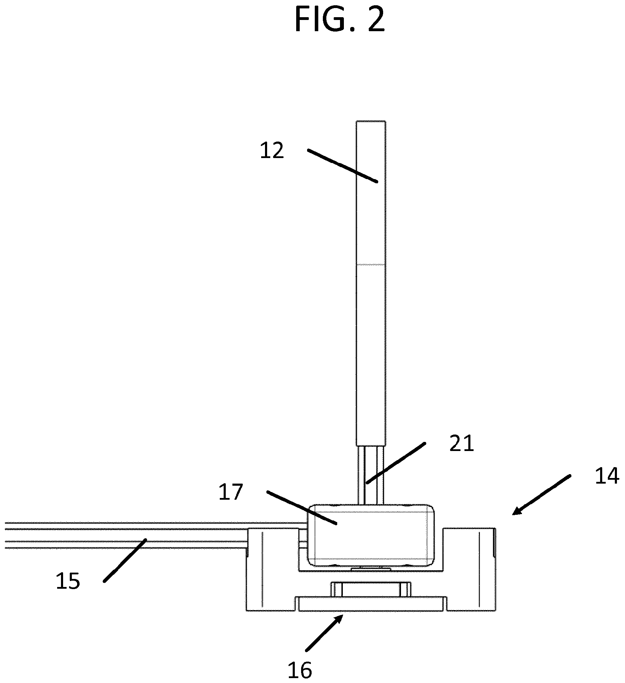

- Fig. 2: eine Einzelheit der Form von Fig. 1,

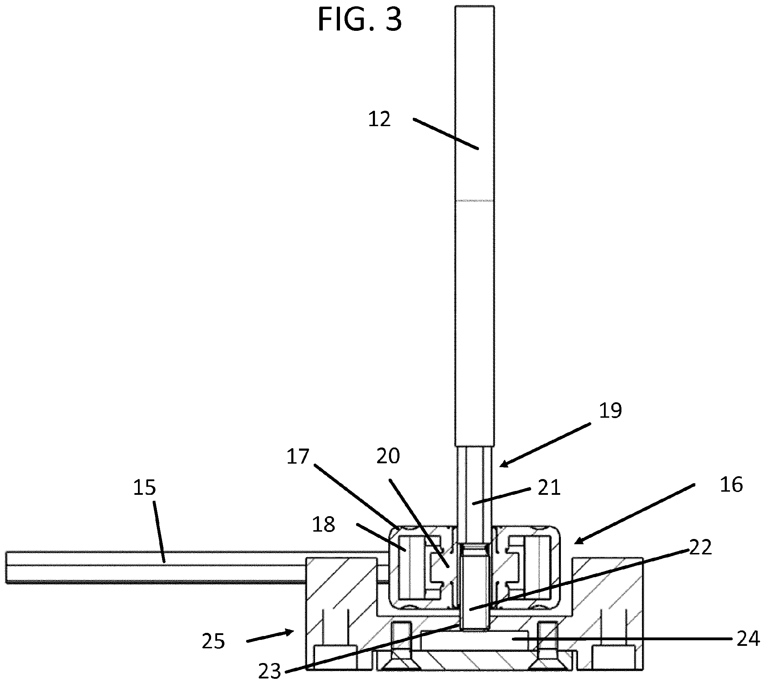

- Fig. 3: die Einzelheit von Fig. 2 in größerem Maßstab und im Schnitt und
- Fig. 4: im Schnitt eine mögliche Ausführungsform eines Blei-Säure-Akkumulators.

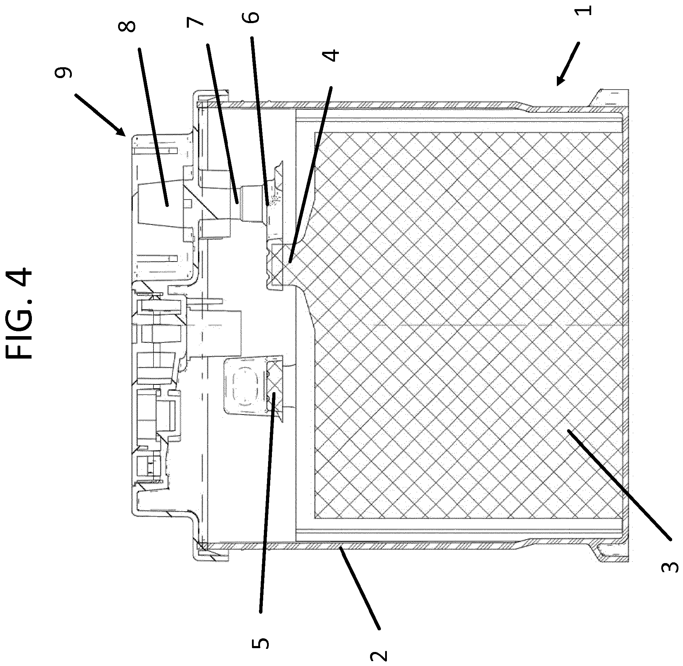

Zunächst wird zum besseren Verständnis der in Fig. 4 gezeigte Blei-Säure- Akkumulator 1 beschrieben.

Der Akkumulator 1 umfasst ein Gehäuse 2, in dem Platten 3 mit Fahnen 4 aufgenommen sind. Die Fahnen 4 der Platten 3 sind über Verbinder 5 so miteinander verbunden, dass jeweils die Fahnen 4 der Platten 3 eines Plattenpaketes (Satzes) positiver Platten einerseits und die Fahnen 4 der Platten 3 eines Plattenpaketes (Satzes) negativer Platten anderseits miteinander verbunden sind.

Zusätzlich sind Polverbinder 6 vorgesehen, die Stängel 7 aufweisen. Die Stängel 7 ragen durch eine Polbuchse 8 im Deckel 9 des Akkumulators 1. Wie weiter oben erwähnt gibt es unterschiedliche Formen und Arten von Blei-Säure-Akkumulatoren 1 und unterschiedliche Längen der Stängel 7 der Polverbinder 6.

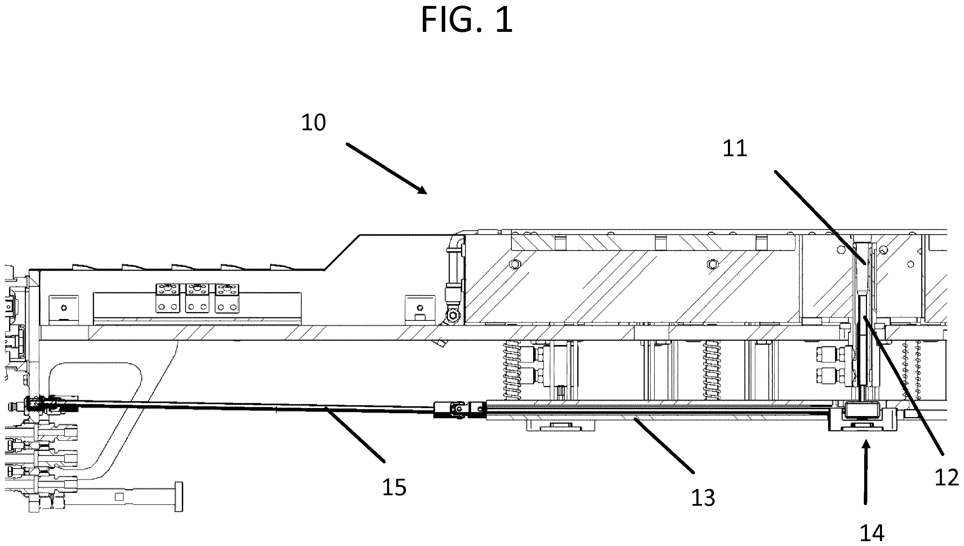

Eine in Fig. 1 gezeigte Angussform 10 umfasst Hohlräume für die Verbinder 5 einerseits und Hohlräume 11 für die Polverbinder 6 einschließlich ihrer Stängel 7 anderseits. Die axiale Länge der Hohlräume 11 für die Polverbinder 6 und deren Stängel 7 wird durch die Lage eines im Hohlraum 11 aufgenommenen Auswerferstiftes 12 bestimmt, wenn sich dieser in seiner Bereitschaftslage befindet. Der Auswerferstift 12 ist in dem Hohlraum 11 gleitend geführt und hat Außenabmessungen, die (nur) um so viel kleiner sind als die Innenabmessungen des Hohlraumes 11, dass trotz Dichtheit gegenüber flüssigem Blei ein Verschieben des Auswerferstifts 12 im Hohlraum 11 möglich ist. Für das Betätigen des Auswerferstifts 12 ist dieser funktionell einer Ausstoßerplatte 13 zugeordnet. Durch Betätigen der Ausstoßerplatte 13 wird der Auswerferstift 12 im Hohlraum 11 aus seiner Bereitschaftslage nach oben gehoben (Wirkstellung) und wirft den angegossenen Stängel 7 eines Polverbinders 6 aus der Angussform 10 aus.

In der erfindungsgemäßen Angussform 10 ist die Bereitschftslage des Auswerferstiftes 12 im Hohlraum 11 einstellbar. Dies erfolgt dadurch, dass der Auswerferstift 12 gegenüber der ihn tragenden Ausstoßerplatte 13 in einer Richtung senkrecht zur Ebene der Ausstoßerplatte 13 verstellt wird. So kann die Lage des oberen Endes des Auswerferstiftes 12 auf den gewünschten Wert eingestellt werden, um die (axiale) Länge des Hohlraumes 11 und damit die Größe des Stängels 7 des Polverbinders 6 auf den jeweils gewünschten Wert einzustellen.

Um diese Verstellbarkeit zu ermöglichen, ist dem Auswerferstift 12 eine an der Ausstoßerplatte 13 angeordnete, also in die Form 10 integrierte Verstellmechanik 14 zugeordnet. Die Verstellmechanik 14 umfasst eine Welle 15 und eine Verstelleinheit 16. Durch Betätigen der Welle 15, deren freies Ende an einer gut zugänglichen Stelle des Angussform 10, beispielsweise im Bereich eines Randes der Angussform 10, angeordnet ist, kann die Lage des Auswerferstiftes 12 in seiner Bereitschaftslage so eingestellt werden, dass der Hohlraum 11 die jeweils erforderliche Größe (Länge) aufweist.

Mit Hilfe der Verstellmechanik 14 kann der Auswerferstift 12 durch Betätigen der Verstellmechanik 14, indem die Welle 15 gedreht wird, in die jeweils gewünschte Bereitschaftslage gebracht werden. Das Drehen der Welle 15 kann von Hand aus und/oder mit Hilfe eines Antriebsmotors (z.B. Elektromotor) erfolgen.

Durch die Drehbewegung der Welle 15 erfolgt eine Höhenverstellung des Auswerferstiftes 12 und somit eine Volumenänderung des Hohlraumes 11 in der Angussform 10, da die Drehbewegung der Welle 15 über ein Getriebe 17 der Verstelleinheit 16 in eine translatorische Bewegung des Auswerferstiftes 12 umgewandelt wird.

Im gezeigten Ausführungsbeispiele ist, wie erfindungsgemäß bevorzugt, die Verstelleinheit 16 wie folgt aufgebaut:
Die Verstelleinheit 16 umfasst ein Winkelgetriebe, insbesondere ein Schneckengetriebe 17, deren Schnecke 18 drehfest auf der Welle 15 befestigt ist. Das Schneckenrad 20 nimmt das untere Ende 19 mit einem Abschnitt 21 desselben in Längsrichtung des Auswerferstiftes 12 verschiebbar auf. Der in das Schneckenrad 20 eingreifende, am unteren Ende 19 des Auswerferstiftes 12 vorgesehene Abschnitt 21 ist als mehrseitiges, im Beispiel sechsseitiges, Prisma ausgebildet und mit dem Schneckenrad 20 nur auf Drehung gekuppelt.

Am freien Ende des unteren Endes 19 trägt der Auswerferstift 12 einen Gewindeabschnitt 22 mit Außengewinde.

Das Außengewinde des Gewindeabschnittes 22 ist in ein Innengewinde 23, das in einer Verstellplatte 24 vorgesehen ist, eingeschraubt.

In einer alternativen Ausführungsform ist am unteren Ende 19 des Auswerferstiftes 12 ein Innengewinde vorgesehen, in das ein mit Außengewinde versehener Teil der Verstellplatte 24 eingeschraubt ist.

Die Verstellplatte 24 ist schwimmend, aber gegen Drehung gesichert, in einer Aufnahme 25 angeordnet, und zwar auf der dem Getriebe 17 gegenüberliegenden Seite. Die Aufnahme 25 ist mit der Ausstoßerplatte 13 verbunden.

Dadurch, dass der Auswerferstift 12 mit seinem Gewindeteil 22 in das Innengewinde 23 der Verstellplatte 24 eingeschraubt ist, wird durch Betätigen des Getriebes 17 über die Welle 15 der Auswerferstift 12 entweder nach oben oder nach unten bewegt, sodass die Höhenausrichtung der Bereitschaftslage des Auswerferstiftes 12 an der Anstoßplatte 13 und damit in dem Hohlraum 11 verändert wird. Damit sich das Getriebe 17 nicht verspannen kann, wirkt das Getriebe 17 auf den prismatischen Abschnitt 21 am unteren Endes 19 des Auswerferstiftes 12 und bleibt somit in Position.

Die gewählte Ausführungsform der Verstellmechanik 14 hat den Vorteil, dass der Auswerferstift 12 bei Druck von oben durch die Selbsthemmung des Getriebes 17 nicht verstellt wird. Überdies werden von oben auf den Auswerferstift 12 einwirkende Kräfte von der Verstellplatte 24 aufgenommen und wirken nicht auf das Getriebe 17 ein.

Somit findet ein Verstellen der Bereitschaftslage des Auswerferstifts 12 relativ zur Ausstoßerplatte 13 und relativ zu dem Hohlraum 11, in welchem er aufgenommen ist, ausschließlich statt, wenn die Welle 15 zum Betätigen der Verstellmechanik 14 betätigt (gedreht) wird.

Besondere Vorteile der erfindungsgemäßen Form, die nicht ausschließlich für das Angießen von Verbindern 5 oder Polverbindern 6 für die Platten 3 von Blei-Säure-Akkumulatoren 1 geeignet ist, liegen in Folgendem:
Die Verstellmechanik für das Verstellen der Bereitschaftslage des Auswerferstiftes 12 überträgt eine Drehbewegung ausschließlich in eine Richtung, sodass ein Selbstverstellen durch Selbsthemmung des Getriebes 17 verhindert ist. Das Getriebe 17 ist schwimmend auf der Betätiger- und der Verstellachse gelagert.

Die Verstelleinheit 16 ist trotz ihrer Befestigung an der Ausstoßerplatte 13 in einem definierten Bewegungsspielraum in zwei Richtungen beweglich, sodass ein Verklemmen verhindert ist. Das Verstellen und das Übertragen der Betätigungsbewegung kann auch während des Betriebes der Ausgussform erfolgen, wenn die Ausstoßerplatte 13 in Bewegung ist, um angegossene Polverbinder 6 und Verbinder 5 auszustoßen.

Zusammenfassend kann ein Ausführungsbeispiel der Erfindung wie folgt beschrieben werden:
Eine Angussform 10 für das Angießen von Verbindern 5 und Polverbindern 6 an Fahnen 4 von positiven und negativen Platten 3 für Blei-Säure-Akkumulatoren 1 umfasst einen, dem Hohlraum 11 für Polverbinder 6 zugeordneten, Auswerferstift 12, der durch Bewegen einer Ausstoßerplatte 13 aus seiner Bereitschaftslage in eine Wirklage verstellbar ist. Um die Größe, insbesondere die Länge des Hohlraumes 11 für Polverbinder 6, auf den gewünschten Wert ändern zu können, ist die Bereitschaftslage des Auswerferstiftes 12 durch eine Verstellmechanik 14 veränderbar, indem die Stellung des Auswerferstiftes 12 an der Ausstoßerplatte 13 verändert wird.

## Patentansprüche

1. Form (10) für das Angießen von Verbindern (5) und Polverbindern (6) an Fahnen (4) von positiven und negativen Platten (3) für Blei-Säure-Batterien (1), welche Form (10) wenigstens einen Form-Hohlraum für Verbinder (5) und wenigstens einen Hohlraum (11) für Polverbinder (6) und den Hohlräumen zugeordnete, an einer Ausstoßerplatte (13) angeordnete Auswerferstift (12), die in den Hohlräumen (11) aus einer Bereitschaftslage in eine Wirklage verstellbar sind, aufweist, **dadurch gekennzeichnet, dass** dem Auswerferstift (12) eine Verstellmechanik (14) zugeordnet ist, dass die Verstellmechanik (14) ein, dem von dem Hohlraum (11) entfernt liegenden Ende (19) des Auswerferstiftes (12) zugeordnetes, Getriebe (17) umfasst, und dass die Bereitschaftslage des Auswerferstiftes (12) in dem wenigstens einen Hohlraum (11) für Polverbinder (6) veränderbar ist.

2. Form nach Anspruch 1, **dadurch gekennzeichnet, dass** die Bereitschaftslage des Auswerferstiftes (12) durch Verstellen desselben in Richtung der Achse des Hohlraumes (11), insbesondere des Hohlraumes (11) für Polverbinder (6), veränderbar ist.

3. Form nach Anspruch 1 oder 2, **dadurch gekennzeichnet, dass** die Verstellmechanik (14), insbesondere das Getriebe (17), selbsthemmend ausgebildet ist.

4. Form nach Anspruch 3, **dadurch gekennzeichnet, dass** das Getriebe (17) ein Winkelgetriebe, vorzugsweise ein Schneckengetriebe, ist.

5. Form nach einem der Ansprüche 1 bis 4, **dadurch gekennzeichnet, dass** die Verstellmechanik (14) eine Betätigungswelle (15) umfasst.

6. Form nach Anspruch 5, **dadurch gekennzeichnet, dass** das freie Ende der Betätigungswelle (15) an einer frei zugänglichen Stelle, insbesondere im Bereich eines seitlichen Randes, der Form (10) liegt.

7. Form nach einem der Ansprüche 4 bis 6, **dadurch gekennzeichnet, dass** das Getriebe (17) der Verstellmechanik (14) in der Ausstoßerplatte (13) schwimmend gelagert ist.

8. Form nach Anspruch 7, **dadurch gekennzeichnet, dass** das Getriebe (17) in einer an der Ausstoßerplatte (13) angeordneten Aufnahme (25) aufgenommen ist und dass der Aufnahme (25) eine Verstellplatte (24), die mit dem Auswerferstift (12) gekuppelt ist, zugeordnet ist.

9. Form nach Anspruch 8, **dadurch gekennzeichnet, dass** die Verstellplatte (24) auf der vom Auswerferstift (12) abgekehrten Seite der Aufnahme (25) angeordnet ist.

10. Form nach Anspruch 8 oder 9, **dadurch gekennzeichnet, dass** die Verstellplatte (24) ein Innengewinde (23) aufweist und dass der Auswerferstift (12) mit einem Gewindeteil (22) mit Außengewinde in das Innengewinde (23) eingeschraubt ist.

11. Form nach einem der Ansprüche 4 bis 10, **dadurch gekennzeichnet, dass** die Schnecke (18) des Schneckengetriebes (17) auf der Betätigungswelle (15) sitzt und dass das Schneckenrad (20) mit dem Auswerferstift (12) nur auf Drehung gekuppelt ist.

12. Form nach einem der Ansprüche 1 bis 11, **dadurch gekennzeichnet, dass** die Größe des Hohlraumes (11), insbesondere des Hohlraumes (11) für Polverbinder (6), durch den in seiner Bereitschaftslage befindlichen Auswerferstift (12) bestimmt ist.

13. Form nach einem der Ansprüche 1 bis 12, **dadurch gekennzeichnet, dass** die Außenabmessungen, insbesondere der Außendurchmesser, des Auswerferstiftes (12) bis auf ein seine Verstellbarkeit erlaubendes Spiel gleich den Innenabmessungen, insbesondere dem Innendurchmesser, des Hohlraumes (11), insbesondere des Hohlraumes (11) für den Polverbinder (6), entspricht.

14. Form nach einem der Ansprüche 1 bis 13, **dadurch gekennzeichnet, dass** die Bereitschaftslage des Auswerferstiftes (12) durch Verändern der Stellung des Auswerferstiftes (12) an der Anstoßerplatte (13) einstellbar ist.

15. Form nach Anspruch 14, **dadurch gekennzeichnet, dass** der Auswerferstift (12) an der Anstoßerplatte (13) in einer zur Anstoßerplatte (13) senkrechten Richtung verstellbar ist.

16. Form nach einem der Ansprüche 1 bis 15, **dadurch gekennzeichnet, dass** die Verstellmechanik (14) in die Form (10) integriert ist.
